# EUROPÄISCHE PATENTSCHRIFT

(11) **EP 2 567 345 B1**
(45) Veröffentlichungstag und Bekanntmachung des Hinweises auf die Patenterteilung: **13.01.2016**
(21) Anmeldenummer: 11746231.7
(22) Anmeldetag: 17.08.2011
(51) Int. Cl.: G06K 7/00

(54) **VERFAHREN ZUM LESEN EINES RFID-TOKENS, RFID-KARTE UND ELEKTRONISCHES GERÄT**
METHOD FOR READING AN RFID TOKEN, RFID CARD AND ELECTRONIC DEVICE
PROCÉDÉ DE LECTURE D'UN JETON RFID, CARTE RFID ET APPAREIL ÉLECTRONIQUE

(30) Priorität: 30.09.2010 DE 102010041745
(43) Veröffentlichungstag der Anmeldung: 13.03.2013
(73) Patentinhaber: Bundesdruckerei GmbH, 10958 Berlin (DE)
(72) Erfinder: DRESSEL, Olaf, 14641 Wustermark (DE)
(74) Vertreter: Richardt Patentanwälte PartG mbB
(86) Internationale Anmeldenummer: PCT/EP2011/064183
(87) Internationale Veröffentlichungsnummer: WO 2012/041595

(56) Entgegenhaltungen:
- WO-A1-2006/103510
- DE-B4-102008 000 067

## Beschreibung

Die Erfindung betrifft ein Verfahren zum Lesen eines RFID-Tokens, eine RFID-Karte sowie ein elektronisches Gerät, insbesondere ein tragbares, batteriebetriebenes elektronisches Gerät.

Aus dem Stand der Technik sind verschiedene Verfahren zum Lesen von RFID-Token bekannt, beispielsweise für Bezahlfunktionen, insbesondere das sogenannte Electronic Ticketing, Zugangskontrollsysteme oder für Authentifizierungszwecke, insbesondere hoheitliche Anwendungen.

RFID-Token-basierte Authentifizierungsverfahren sind aus der DE 10 2008 000 67 A1, EP 2 041 729 B1 und der zum Anmeldezeitpunkt unveröffentlichten Patentanmeldung DE 10 2009 001 959.6-31 derselben Patentanmelderin offenbart, die hiermit vollumfänglich zum Offenbarungsgehalt der vorliegenden Patentanmeldung gemacht werden.

Aus der DE 20 2006 020 843 U1 ist eine Speicherkarte mit einem Speicherkarten-Interface und einer RFID-Funktionseinheit zum Empfang von Radiofrequenzsignalen an sich bekannt.

Die Druckschrift WO 2006/103510 A1 offenbart ein elektronisches Gerät mit einer SD-Kartenschnittstelle, und einen RFID-Leser, der eine SD-Schnittstelle aufweist. Das elektronische Gerät weist ein Betriebsprogramm, einen SD-Kartentreiber und eine damit verbundene Firmware auf. Zur Abfrage eines RFID-Tags wird ein Befehl durch einen Schreibzugriff auf das SDIO-Modul des RFID-Lesers geschrieben und der Befehl anschließend an das RFID-Lese/Schreibmodul weitergeleitet.

Der Erfindung liegt demgegenüber die Aufgabe zugrunde, ein verbessertes Verfahren zum Lesen eines RFID-Tokens sowie eine entsprechende RFID-Karte und ein elektronisches Gerät für eine solche RFID-Karte zu schaffen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen eines RFID-Tokens geschaffen, wobei ein RFID-Lesekommando für einen Lesezugriff auf den RFID-Token in ein Speicherkartenkommando umgewandelt wird. Dies kann so erfolgen, dass aufgrund des RFID-Lesekommandos ein Speicherkommando zur Speicherung des RFID-Lesekommandos auf einer Speicherkarte erzeugt wird. Statt einer Speicherkarte befindet sich aber eine RFID-Karte mit einer SpeicherkartenSchnittstelle in einem Speicherkartenleser des elektronischen Geräts. Das Speicherkommando wird von der RFID-Karte ausgeführt, indem das in dem Speicherkommando beinhaltete RFID-Lesekommando als ein RFID-Lesesignal an den RFID-Token gesendet wird.

Die Erzeugung des RFID-Lesekommandos kann durch das elektronische Gerät selbst, insbesondere ein Anwendungsprogramm des elektronischen Geräts, oder ein externes Gerät, beispielsweise ein erstes Computersystem, welches mit dem elektronischen Gerät über eine Kommunikationsverbindung koppelbar ist, erfolgen.

Nach Ausführungsformen der Erfindung erfolgt die Umsetzung des RFID-Lesekommandos in das Speicherkartenkommando durch das elektronische Gerät, wie zum Beispiel durch ein Treiberprogramm für die Speicherkarten-Schnittstelle, wobei das Treiberprogramm in das Betriebssystem des elektronischen Geräts integriert sein kann. Dies ist besonders vorteilhaft, da so durch die SpeicherkartenSchnittstelle in Kombination mit dem Treiberprogramm eine virtuelle RFID-Schnittstelle zum Empfang von RFID-Lesekommandos geschaffen wird. Auf diese Art und Weise kann das elektronische Gerät für eine RFID-Kommunikation mit einem RFID-Token verwendet werden, obwohl das elektronische Gerät kein RFID-Lesegerät beinhaltet.

Hierdurch wird es dem Nutzer ermöglicht, auf ein bereits in seinem Besitz befindliches elektronisches Gerät ohne RFID-Schnittstelle zurückzugreifen, um mit einem RFID-Token zu kommunizieren, indem eine erfindungsgemäße RFID-Karte in den Speicherkartenleser des elektronischen Geräts anstelle einer üblichen Speicherkarte eingeführt wird und indem die entsprechende Treibersoftware zur Umwandlung von RFID-Lesekommandos in Speicherkartenkommandos auf dem elektronischen Gerät installiert wird.

Bei dem RFID-Token kann es sich beispielsweise um ein Dokument handeln, insbesondere ein Wert- oder Sicherheitsdokument.

Unter einem "Dokument" werden erfindungsgemäß Papier basierte und/oder Kunststoff basierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung einer Information, insbesondere zumindest eines Attributs, und einer RFID-Schnittstelle für eine RFID-Kommunikation mit einem RFID-Lesegerät integriert ist.

Unter RFID-Kommunikation wird dabei jedes Kommunikationsverfahren in einem Radiofrequenzbereich verstanden, wobei beispielsweise Trägerwellen der Frequenzen 125 KHz, 134 KHz oder 13,56 MHz zum Einsatz kommen können. Insbesondere kann die RFID-Kommunikation nach dem Standard ISO/IEC 14443 erfolgen.

Insbesondere kann das RFID-Lesekommando also sogenannte Application Protocol Data Unit (APDU) ausgebildet sein und die RFID-Antwort des RFID-Tokens als sogenannte Response APDU.

Unter einem "Speicherkartenleser" wird hier vorzugsweise ein in das elektronische Gerät integrierter Kartenleser zum Zugriff auf elektronische Speicherkarten, insbesondere sogenannte Secure Digital (SD) Speicherkarten, verstanden. Solche SD-Speicherkarten gibt es standardmäßig in verschiedenen Formaten, Speicherkapazitäten, mit verschiedenen Dateisystemen und Zugriffsgeschwindigkeiten, wie zum Beispiel SD High Capacity Speicherkarten, SD Extended Capacity (SDXC), MiniSD, MicroSD.

Nach Ausführungsformen der Erfindung hat das elektronische Gerät zumindest eine gedruckte Schaltung, beispielsweise eine sogenannte Platine, welche den in das Gehäuse integrierten Speicherkartenleser des Geräts zumindest teilweise überdeckt. Insbesondere kann der Speicherkartenleser auf der Platine montiert sein.

Um dennoch eine hinreichend starke Abstrahlung des RFID-Lesekommandos und den Empfang der RFID-Antwort durch die RFID-Karte in dem Speicherkartenleser zu gewährleisten, hat die RFID-Antenne der RFID-Karte eine Richtungskeule, die von der Platine weggerichtet ist. Beispielsweise kann die Richtungskeule der RFID-Antenne in Richtung auf die Einführrichtung der RFID-Karte in den Speicherkartenleser ausgerichtet sein.

Nach einer Ausführungsform der Erfindung wird die RFID-Antwort durch die RFID-Karte zwischengespeichert und durch ein nachfolgendes Lesekommando des elektronischen Geräts über den Speicherkartenleser ausgelesen. Dies hat den Vorteil, dass auch für das Lesen der RFID-Antwort die Speicherkarten-Schnittstelle des elektronischen Geräts verwendet werden kann.

Nach einer Ausführungsform der Erfindung wird der Empfang und/oder die Speicherung der RFID-Antwort durch die RFID-Karte gegenüber dem elektronischen Gerät über die Speicherkarten-Schnittstelle signalisiert, beispielsweise in Form eines Bussignals über den Datenbus, über welchen die Speicherkarten-Schnittstellen der RFID-Karten und des elektronischen Geräts miteinander kommunizieren. Aufgrund dieser Signalisierung generiert das Treiberprogramm des elektronischen Geräts dann das Speicherkarten-Lesekommando zum Auslesen der RFID-Antwort aus dem Speicher der RFID-Karte.

Alternativ wird das Speicherkarten-Lesekommando von dem Treiber nach einem vorbestimmten Zeitraum generiert. Hierfür kann in dem elektronischen Gerät ein Timer vorgesehen sein, der z.B. mit der Ausgabe des RFID-Lesekommandos gestartet wird und der nach dem vorbestimmten Zeitraum abläuft, der für das Senden des RFID-Lesekommandos sowie für den Empfang und die Speicherung der RFID-Antwort hierauf durch die RFID-Karte ausreichend lang bemessen ist.

Gemäß einer Ausführungsform der Erfindung wird derselbe Speicherbereich der RFID-Karte als Pufferspeicher für das Senden der RFID-Lesekommandos und für den Empfang von RFID-Antworten hierauf genutzt. Der Pufferspeicher wird dann immer spätestens vor der Ausgabe eines weiteren RFID-Lesekommandos durch das elektronische Gerät an die RFID-Karte gelesen, um ein Überschreiben der RFID-Antwort und damit einen Datenverlust durch das nachfolgende RFID-Lesekommando zu vermeiden.

Nach einer Ausführungsform der Erfindung wird ein kryptographisches Protokoll zum Lesen zumindest eines Attributs aus dem RFID-Token ausgeführt, wobei vorzugsweise die hierzu erforderlichen APDUs mit Hilfe von Speicherkartenkommandos zu der RFID-Karte übertragen werden und die entsprechenden Response-APDUs mit Hilfe von Speicherkarten-Lesekommandos durch das elektronische Gerät empfangen werden. Insbesondere kann auf diese Art und Weise ein in der DE 10 2008 000 67 B4 beanspruchtes Verfahren durchgeführt werden.

Nach einer weiteren Ausführungsform betrifft die Erfindung ein Verfahren zum Lesen zumindest eines in dem RFID-Token gespeicherten Attributs, wobei der RFID-Token einem Nutzer zugeordnet ist, und wobei der RFID-Token eine RFID-Schnittstelle aufweist, mit folgenden weiteren Schritten: Authentifizierung des Nutzers gegenüber dem RFID-Token, Aufbau einer Kommunikationsverbindung, insbesondere einer Mobilfunkverbindung, zwischen dem elektronischen Gerät, welches insbesondere als Mobilfunkgerät ausgestaltet sein kann, und einem ersten Computersystem, wobei das elektronische Gerät eine zweite Schnittstelle aufweist, die die Speicherkarten-Schnittstelle beinhaltet, Aufbau einer geschützten Verbindung über die Kommunikationsverbindung und über die ersten und zweiten Schnittstellen zwischen dem ersten Computersystem und dem RFID-Token, Authentifizierung des ersten Computersystems gegenüber dem RFID-Token über die geschützte Verbindung, nach erfolgreicher Authentifizierung des Nutzers und des ersten Computersystems gegenüber dem RFID-Token, Lesezugriff des ersten Computersystems auf das zumindest eine in dem RFID-Token gespeicherte Attribut zur Übertragung des zumindest einen Attributs nach dessen Signierung über ein Netzwerk, wobei zur Durchführung des Lesezugriffs ein oder mehrere RFID-Lesekommandos durch das erste Computersystem und/oder das elektronische Gerät erzeugt werden.

In einem weiteren Aspekt betrifft die Erfindung eine RFID-Karte mit einer Speicherkarten-Schnittstelle für ein Speicherkarten-Lesegerät eines elektronischen Geräts und mit einem Speicherkarten-Gehäuse, in welchem die Speicherkarten-Schnittstelle und ein über die Speicherkarten-Schnittstelle ansprechbares RFID-Lesegerät integriert sind, und mit einem Prozessor zur Ansteuerung einer RFID-Schnittstelle der RFID-Karte zum Senden eines RFID-Lesekommandos aufgrund des Empfang eines Speicherkartenkommandos, wobei es sich bei dem Speicherkartenkommando vorzugsweise um ein Kommando zum Speichern eines RFID-Lesekommandos handelt.

Unter einer RFID-Karte wird hier insbesondere jede Chipkarte verstanden, die ein Speicherkartengehäuse aufweist, beispielsweise ein SD-Speicherkartengehäuse, mit einer entsprechenden Speicherkarten-Schnittstelle. Anstelle oder zusätzlich zu einem elektronischen Datenspeicher beinhaltet die RFID-Karte ein RFID-Lesegerät, welches über die Speicherkarten-Schnittstelle von einem Speicherkarten-Lesegerät ansprechbar ist.

In einem weiteren Aspekt betrifft die Erfindung ein elektronisches Gerät, insbesondere ein tragbares, batteriebetriebenes elektronisches Gerät, wie zum Beispiel ein Mobiltelefon, einen Laptop-Computer, eine elektronische Kamera, ein Smartphone, insbesondere ein iPhone oder einen iPad, oder eine andere electronic appliance oder eine Computersystem, wie z.B. einen PC, mit einem integrierten Speicherkartenleser für eine erfindungsgemäße RFID-Karte. Das elektronische Gerät hat vorzugsweise ein Treiberprogramm, welches Teil des Betriebssystem sein kann, durch welches in Kombination mit dem Speicherkarten-Lesegerät des elektronischen Geräts eine virtuelle RFID-Schnittstelle gebildet wird, über die ein Anwendungsprogramm mit dem RFID-Token über die RFID-Karte kommunizieren kann.

Nach einer Ausführungsform der Erfindung ist das RFID-Lesegerät der RFID-Karte als Basis-Chipkartenleser (Cat B) ausgebildet, und zwar beispielsweise nach der technischen Richtlinie BSI TR-03119, Version 1.1 "Anforderungen an Chipkartenleser mit ePA Unterstützung".

Im Weiteren werden Ausführungsformen der Erfindung mit Bezugnahme auf die Zeichnungen näher erläutert.

Es zeigen:
- Figur 1: ein Blockdiagramm eines erfindungsgemäßen RFID-Systems,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens,
- Figur 4: ein Blockdiagramm einer Ausführungsform einer erfindungsgemäßen RFID-Karte,
- Figur 5: ein Blockdiagramm einer Ausführungsform eines elektronischen Geräts mit einer in den Speicherkartenleser eingeführten RFID-Karte,
- Figur 6: ein Blockdiagramm einer ersten Ausführungsform erfindungsgemäßer Computersysteme,
- Figur 7: ein Flussdiagramm einer Ausführungsform eines erfindungsgemäßen Verfahrens,
- Figur 8: ein UML-Diagramm einer weiteren Ausführungsform eines erfindungsgemäßen Verfahrens,
- Figur 9: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

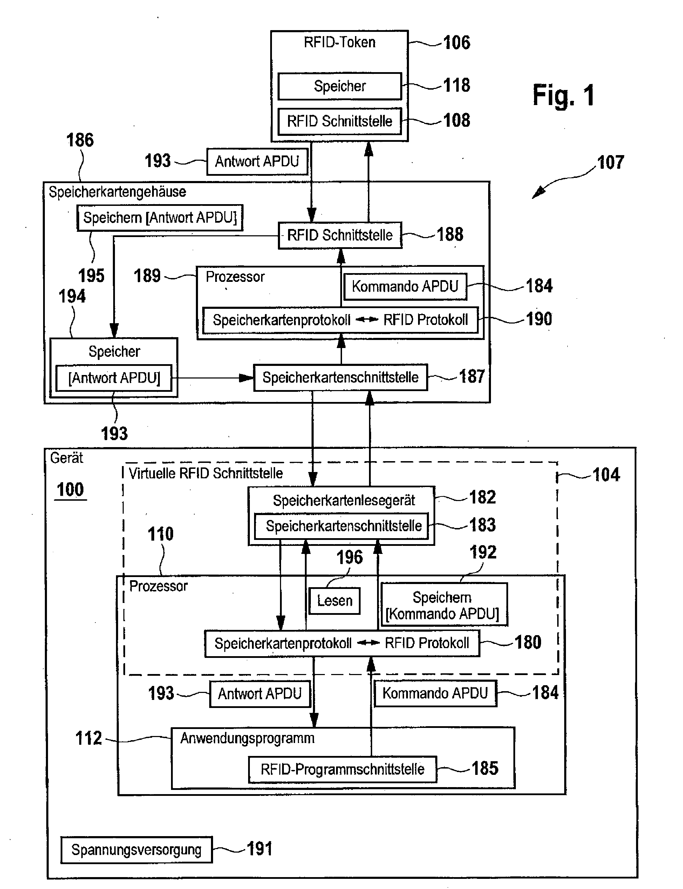

Die Figur 1 zeigt ein elektronisches Gerät, bei dem es sich beispielsweise um ein tragbares, batteriebetriebenes Gerät handeln kann; bei dem elektronischen Gerät kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, eine electronic appliance oder dergleichen handeln. Das elektronische Gerät wird im folgenden ohne Beschränkung der Allgemeinheit als Nutzer-Computersystem 100 bezeichnet.

Das Nutzer-Computersystem 100 hat eine Schnittstelle 104, die als virtuelle RFID-Schnittstelle zur Kommunikation mit einem RFID-Token 106 über eine RFID-Karte 107 ausgebildet ist.

Das Nutzer-Computersystem 100 hat zumindest einen Prozessor 110 zur Ausführung eines Treiberprogramms 180, welches Teil eines Betriebssystems des Nutzer-Computersystems 100 sein kann. Das Nutzer-Computersystem 100 hat ferner ein integriertes Speicherkarten-Lesegerät 182 mit einer Speicherkarten-Schnittstelle 183 zur Aufnahme einer Speicherkarte, wie zum Beispiel einer SD-Speicherkarte. Das Treiberprogramm 180 beinhaltet alternativ oder zusätzlich zu den standardisierten Funktionen eines Treibers für ein Speicherkarten-Lesegerät eine Umsetzungsroutine zur Umsetzung eines RFID-Protokolls in ein Speicherkartenprotokoll und umgekehrt. Hierdurch wird es ermöglicht, dass das Nutzer-Computersystem 100 über die Speicherkarten-Schnittstelle 183 auf die RFID-Karte 107 zugreifen kann, um ein RFID-Lesekommando 184 an den RFID-Token 106 zu senden.

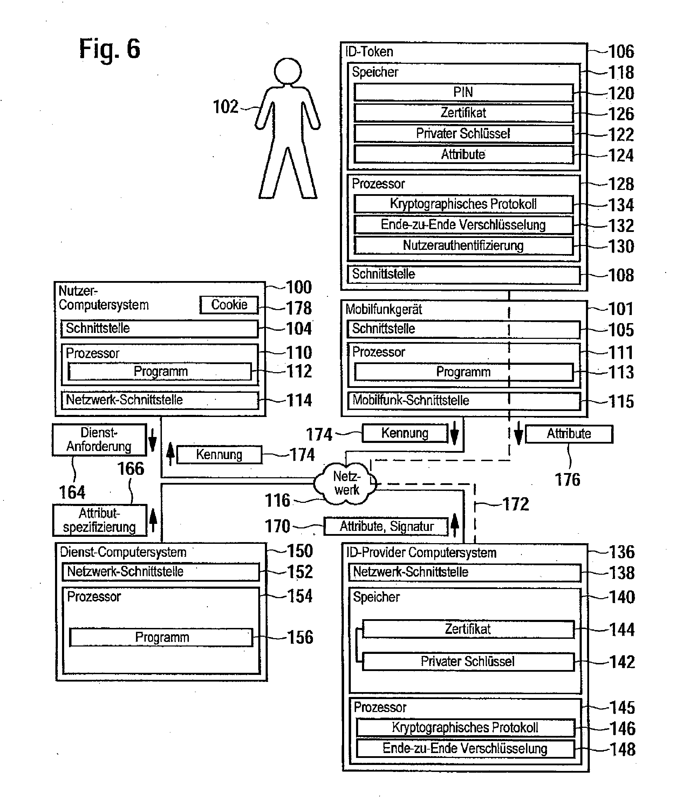

Das RFID-Lesekommando 184 kann beispielsweise als eine sogenannte Kommando-APDU ausgebildet sein. Das RFID-Lesekommando 184 kann durch die Ausführung von Programminstruktionen 112, welche ein Anwendungsprogramm bilden, erzeugt werden, wobei das Anwendungsprogramm eine RFID-Programmschnittstelle, beispielsweise ein sogenanntes Application Programming Interface aufweist. Alternativ kann das RFID-Lesekommando 184 von dem Nutzer-Computersystem 100 zum Beispiel über ein Netzwerk 116 (vgl. Figur 6) von einem ID-Provider-Computersystem 136 empfangen werden.

Die RFID-Karte 107 hat ein Speicherkartengehäuse 186, welches äußerlich identisch zu einem standardisierten SD-Speicherkartengehäuse sein kann. Das Speicherkartengehäuse 186 trägt eine Speicherkarten-Schnittstelle 187 mit elektrischen Kontakten zur Kontaktierung der Speicherkarten-Schnittstelle 183 des Speicherkarten-Lesegeräts 182. Die Speicherkarten-Schnittstelle 187 kann wiederum hinsichtlich der Ausformung der elektrischen Kontakte und der verwendeten Spannungspegel wie bei einer üblichen SD-Speicherkarte ausgebildet sein.

Im Unterschied zu einer üblichen Speicherkarte beinhaltet die RFID-Karte 107 eine RFID-Schnittstelle 188 zur Kommunikation mit einer entsprechenden RFID-Schnittstelle 108 des RFID-Tokens 106. Die RFID-Karte 107 hat ferner einen Prozessor 189 zur Ausführung eines Programms 190, durch welches die RFID-Schnittstelle 188 angesteuert wird. Das Programm 190 dient insbesondere zur Umsetzung des Speicherkartenprotokolls in das RFID-Protokoll und umgekehrt.

Durch die RFID-Schnittstelle 188 und den Prozessor 189 wird also ein RFID-Lesegerät gebildet, welches ein Auslesen einer in einem Speicher 118 des RFID-Tokens 106 gespeicherten Information, wie zum Beispiel eines Attributs, ermöglicht.

Das Nutzer-Computersystem 100 verfügt über eine Spannungsversorgungsschaltung 191. Vorzugsweise ist die Speicherkarten-Schnittstelle 183 mit dieser Spannungsversorgungsschaltung 191 verbunden, sodass die RFID-Karte 107 über die Speicherkarten-Schnittstelle 187 mit elektrischer Energie, insbesondere für die RFID-Kommunikation mit dem RFID-Token 106, versorgt wird.

Im Betrieb wird beispielsweise durch Ausführung der Programminstruktionen 112 das RFID-Lesekommando 184 generiert und in das Treiberprogramm 180 eingegeben. Das Treiberprogramm 180 generiert daraufhin ein Speicherkommando 192 zur Speicherung des RFID-Lesekommandos 184 gemäß dem Speicherkartenprotokoll. Dieses Speicherkommando 192 wird über die Speicherkarten-Schnittstelle 183 zu der Speicherkarten-Schnittstelle 187 der RFID-Karte 107 übertragen. Das Speicherkommando 192 wird dann von dem Programm 190 verarbeitet, indem das in dem Speicherkommando 192 beinhaltete RFID-Lesekommando 184 gemäß dem RFID-Protokoll über die RFID-Schnittstelle 188 an den RFID-Token 106 gesendet wird, um die Information aus dem Speicher 118 zu lesen.

Der RFID-Token 106 antwortet hierauf mit einer RFID-Antwort 193, wie zum Beispiel einer sogenannten Antwort- oder Response-APDU.

Die RFID-Antwort 193 wird durch das Programm 190 verarbeitet, indem die Antwort-APDU 193 gemäß dem Speicherkartenprotokoll über die SpeicherkartenSchnittstelle 187 an die Speicherkarten-Schnittstelle 183 übertragen wird, sodass sie durch Ausführung der Programminstruktionen 112 weiterverarbeitet werden kann.

Vorzugsweise hat die RFID-Karte 107 hierzu einen elektronischen Speicher 194 zur Zwischenspeicherung der RFID-Antwort 193. Nach Empfang der RFID-Antwort 193 wird diese durch das Programm 190, zum Beispiel gemäß dem Speicherkartenprotokoll, durch ein Speicherkommando 195 in dem Speicher 194 gespeichert. Durch ein Lesekommando 196 gemäß dem Speicherkartenprotokoll des Treiberprogramms 180 wird dann die RFID-Antwort 193 aus dem Speicher 194 über die Speicherkarten-Schnittstellen 183 und 187 ausgelesen.

Das Lesekommando 196 kann durch das Programm 180 zum Beispiel nach einem vordefinierten Zeitraum nach dem Speicherkommando 192 gesendet werden. Alternativ kann durch die RFID-Karte 107 über die Speicherkarten-Schnittstelle 187 zum Beispiel durch ein Bussignal signalisiert werden, dass die RFID-Antwort 193 in dem Speicher 194 gespeichert worden ist, woraufhin dann das Lesekommando 196 erzeugt wird. Beispielsweise können die Speicherkarten-Schnittstellen 183 und 187 durch einen Datenbus, wie zum Beispiel einen USB-Bus, miteinander gekoppelt sein, über den das Bussignal übertragen werden kann.

Besonders vorteilhaft ist hierbei, dass das durch die Programminstruktionen 112 gebildete Anwendungsprogramm unverändert genutzt werden kann, d.h. es ist keine Anpassung des an Anwendungsprogramms an das Nutzer-Computersystem 100 erforderlich, welches keine RFID-Schnittstelle aufweist. Dies wird dadurch ermöglicht, dass durch das Treiberprogramm 180 und das Speicherkarten-Lesegerät 182 eine virtuelle RFID-Schnittstelle 104 gebildet wird, die dieselbe Funktionalität wie eine übliche RFID-Schnittstelle aufweist, sodass aus Sicht des Anwendungsprogramms das Nutzer-Computersystem 100 tatsächlich eine RFID-Schnittstelle zu haben scheint.

Von besonderem Vorteil ist dabei ferner, dass das Nutzer-Computersystem 100 für die RFID-Kommunikation aufgerüstet werden kann, indem lediglich eine übliche Speicherkarte durch die RFID-Karte 107 ersetzt und das Treiberprogramm 180 installiert wird.

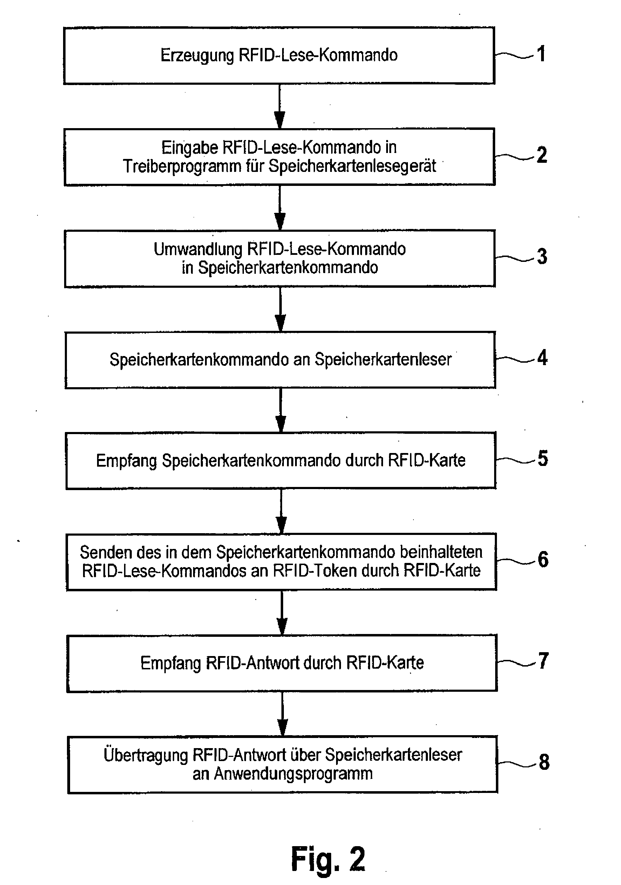

Die Figur 2 zeigt eine Ausführungsform eines erfindungsgemäßen Verfahrens. In dem Schritt 1 wird ein RFID-Lesekommando nach einem RFID-Protokoll, zum Beispiel durch das Anwendungsprogramm des elektronischen Geräts, wie zum Beispiel des Nutzer-Computersystems 100, erzeugt. In dem Schritt 2 wird dieses RFID-Lesekommando in das Treiberprogramm für das Speicherkarten-Lesegerät eingegeben. Dieses Treiberprogramm wandelt in dem Schritt 3 das RFID-Lesekommando in ein Speicherkartenkommando nach einem Speicherkartenprotokoll um, beispielsweise indem ein Speicherkommando zum Speichern des RFID-Lesekommandos erzeugt wird.

Dieses Speicherkartenkommando wird in dem Schritt 4 von dem Treiberprogramm dann an den Speicherkartenleser übergeben, sodass die RFID-Karte das Speicherkommando von dem Speicherkarten-Lesegerät in dem Schritt 5 empfängt. Die RFID-Karte sendet dann in dem Schritt 6 das in dem Speicherkartenkommando beinhaltete RFID-Lesekommando an den RFID-Token und empfängt in dem Schritt 7 von dem RFID-Token eine RFID-Antwort. Diese RFID-Antwort wird dann in dem Schritt 8 von der RFID-Karte über den Speicherkartenleser zum Beispiel an das Anwendungsprogramm übertragen.

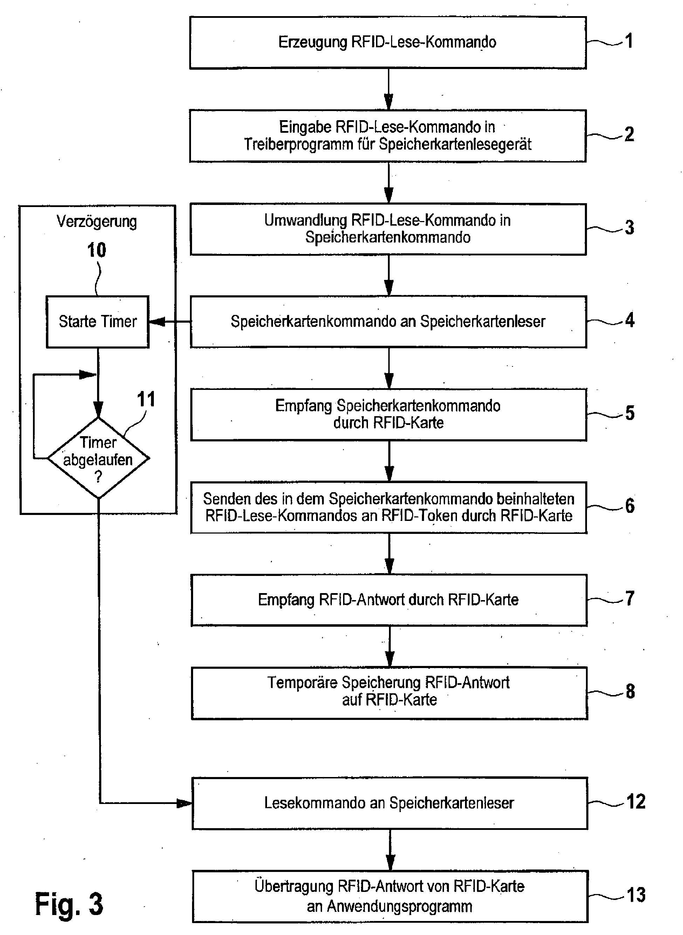

Die Figur 3 zeigt eine weitere Ausführungsform eines erfindungsgemäßen Verfahrens, wobei die Schritte 1 bis 7 identisch zu den Schritten 1 bis7 der Figur 2 sein können.

In dem Schritt 9 wird die RFID-Antwort auf der RFID-Karte temporär gespeichert, damit die RFID-Antwort durch ein Lesekommando aus der RFID-Karte ausgelesen werden kann. Hierzu ist es erforderlich, dass das Lesekommando nach dem Speicherkartenprotokoll erst nach der Speicherung der RFID-Antwort an die RFID-Karte gerichtet wird.

Um dieses Timing des Lesekommandos sicherzustellen, kann vorgesehen sein, dass aufgrund des RFID-Lesekommandos durch das Nutzer-Computersystem in dem Schritt 10 ein Timer gestartet wird. Das Starten des Timers kann beispielsweise erfolgen, nachdem das Speicherkartenkommando an den Speicherkartenleser in dem Schritt 4 ausgegeben worden ist oder auch zu einem früheren Zeitpunkt, wie zum Beispiel bereits in den Schritten 1, 2 oder 3, wobei dann die Zeitdauer des Timers entsprechend länger zu wählen ist.

Wenn in dem Schritt 11 von dem Nutzer-Computersystem festgestellt wird, dass der Timer abgelaufen ist, wird anschließend das Lesekommando in dem Schritt 12 an den Speicherkartenleser gerichtet, um die auf der RFID-Karte gespeicherte RFID-Antwort zu lesen. In dem Schritt 13 wird daraufhin die RFID-Antwort von der RFID-Karte an das Nutzer-Computersystem übertragen, sodass die RFID-Antwort zum Beispiel von dem Anwendungsprogramm des Nutzer-Computersystems weiterverarbeitet werden kann. In Abhängigkeit von einem Ergebnis der Weiterverarbeitung erzeugt das Anwendungsprogramm ein weiteres RFID-Lesekommando, d.h. die Ablaufsteuerung geht dann zu dem Schritt 1 zurück.

Die Schritte 10 und 11 können zum Beispiel in dem Treiberprogramm (vgl. Figur 1) implementiert sein.

Alternativ kann die Verzögerung des Lesekommandos auch dadurch erreicht werden, dass die RFID-Karte die Speicherung der RFID-Antwort in dem Schritt 9 an das Nutzer-Computersystem signalisiert, woraufhin dann das Lesekommando erzeugt wird.

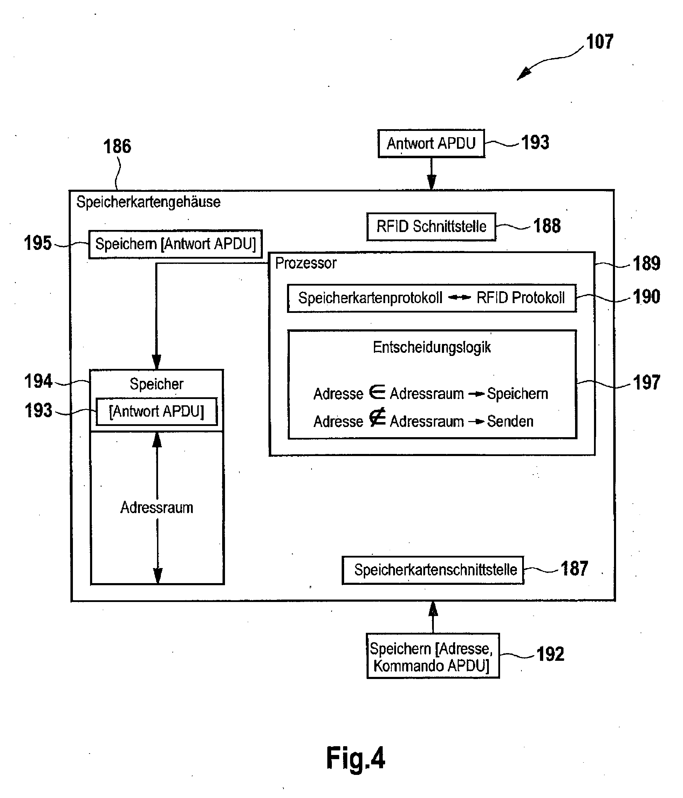

Die Figur 4 zeigt eine Ausführungsform der RFID-Karte 107, welche zusätzlich als Speicherkarte, beispielsweise als SD-Speicherkarte, ausgebildet ist. Der Speicher hat hierzu einen vordefinierten Adressraum, auf den über die Speicherkarten-Schnittstelle 187 wie üblich zum Schreiben und Lesen von Daten zugegriffen werden kann. Zusätzlich hat der Speicher 194 einen Speicherbereich außerhalb dieses Adressraums, welcher als Pufferspeicher für die RFID-Kommunikation mit dem RFID-Token 106 (vgl. Figur 1) dient.

Der Prozessor 189 dient hier zur Ausführung von Programminstruktionen 197, die eine Entscheidungslogik implementieren.

Wenn ein Speicherkommando 192 die RFID-Karte 107 über deren Speicherkarten-Schnittstelle 187 erreicht, so wird durch Ausführung der Programminstruktionen 197 geprüft, ob die in dem Speicherkommando 192 angegebene Adresse innerhalb des Adressraums liegt oder nicht. Wenn die Adresse des Speicherkommandos 192 innerhalb des Adressraums liegt, so werden die Nutzerdaten des Speicherkommandos 192 innerhalb dieses Adressraums des Speichers 194 gespeichert. Ist das Ge-genteil der Fall, so wird das Speicherkommando 192 als ein Kommando zum Senden der Nutzerdaten des Speicherkommandos 192, hier also des RFID-Lesekommandos 184, interpretiert, sodass das RFID-Lesekommando 184 über die RFID-Schnittstelle 188 gesendet wird. Hierzu kann eine Zwischenspeicherung des RFID-Lesekommando 184 außerhalb des vordefinierten Adressraums des Speichers 194 vorgesehen sein.

Dementsprechend wird eine von der RFID-Schnittstelle 188 empfangene RFID-Antwort 193 durch das Programm 190 durch ein Speicherkommando 195 in dem elektronischen Speicher 194 außerhalb dieses Adressraums gespeichert. Bei einem nachfolgenden Lesekommando des Speicherkartenlesers, welches eine Adresse außerhalb dieses Adressraums angibt, wird die RFID-Antwort 193 aus dem Speicher 194 ausgelesen. Der Speicher 194 wird also in eine Speicherbereich zum Lesen und Speichern von Daten mit dem frei adressierbaren vordefinierten Adressraum und einen Pufferspeicherbereich außerhalb dieses Adressraums für die RFID Kommunikation aufgeteilt.

Dies hat den besonderen Vorteil, dass der Nutzer die RFID-Karte nicht nur für die RFID-Kommunikation, sondern auch als Speicherkarte benutzen kann. Das Treiberprogramm 180 (vgl. Fig. 1) ist dementsprechend ausgebildet, indem in dem Speicherkommando 192 eine Adresse außerhalb des vordefinierten Adressraums angegeben wird oder keine Adresse angegeben wird.

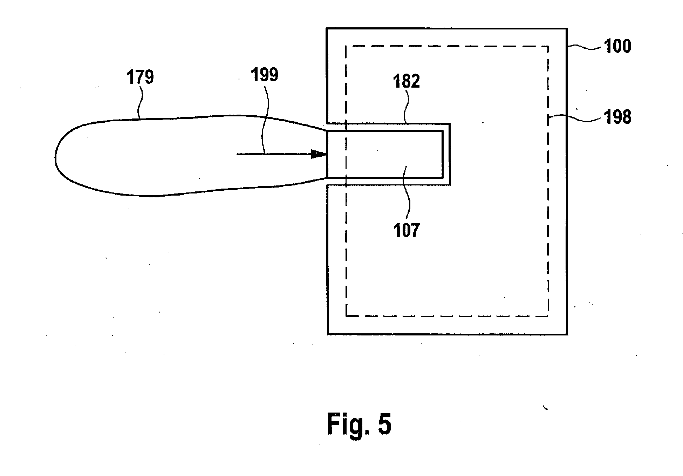

Die Figur 5 zeigt ein schematisches Diagramm einer Ausführungsform des Nutzer-Computersystems 100 mit einer Platine 198, die eine gedruckte Schaltung und elektronische Bauelemente trägt. Das Speicherkarten-Lesegerät 182 des Nutzer-Computersystems 100 bildet in dem Gehäuse des Nutzer-Computersystems 100 eine Kavität, in die die RFID-Karte wie eine übliche Speicherkarte einführbar ist, indem der Nutzer die RFID-Karte in Pfeilrichtung 199 in diese Kavität hineindrückt.

Die RFID-Antenne der RFID-Schnittstelle 188 (vgl. Figuren 1 und 4) hat hier eine Antennenkeule 179, die von der Platine 198 weggerichtet ist, da die Platine 198 hinsichtlich der von der RFID-Antenne abzusendenden und der zu empfangenden RFID-Signale eine Schirmung darstellt, die zu einer Dämpfung der zu sendenden bzw. zu empfangenden Signale führt. Bei der hier betrachteten Ausführungsform ist die Antennenkeule 179 von dem Gehäuse des Nutzer-Computersystems 100 abstehend in etwa der Einschubrichtung 199 ausgerichtet, sodass keine Dämpfung durch die Platine 198 erfolgen kann.

Die Figur 6 zeigt eine weitere Ausführungsform eines Nutzer-Computersystems 100 eines Nutzers 102. Das Nutzer-Computersystem 100 hat eine virtuelle RFID Schnittstelle 104 zur Kommunikation mit einem RFID-Token 106, der eine entsprechende Schnittstelle 108 aufweist; diese kann so wie in der Ausführungsform gemäß Figuren 1 bis 5 ausgebildet sein.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Die Programminstruktionen 112 können das Treiberprogramm 180 beinhalten. Bei dem Netzwerk 116 kann es sich um ein Computernetzwerk, wie zum Beispiel das Internet, handeln. Das Netzwerk 116 beinhaltet ein Mobilfunknetzwerk oder ist mit einem Mobilfunknetzwerk verbunden.

Der RFID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem RFID-Token 106 benötigt wird. Bei diesem Referenzwert handelt es sich beispielsweise um eine so genannte Personal Identification Number (PIN), oder um Referenzdaten für ein biometrisches Merkmal des Nutzers 102, welches für die Authentifizierung des Nutzers gegenüber dem RFID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den RFID-Token selbst betreffen, wie zum Beispiel die Institution, die den RFID-Token erstellt oder ausgegeben hat, die Gültigkeitsdauer des RFID-Tokens, einen Identifikator des RFID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des RFID-Tokens 106 gespeichert sein. Alternativ oder zusätzlich kann das Zertifikat auch in einem öffentlichen Verzeichnisserver gespeichert sein.

Der RFID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem RFID-Token.

Die Figur 6 zeigt ferner ein Mobilfunkgerät 101 des Nutzers 102. Bei dem Mobilfunkgerät 101 kann es sich zum Beispiel um ein Handy oder ein Smartphone handeln. Das Mobilfunkgerät 101 hat eine Schnittstelle 105 zur Kommunikation mit der entsprechenden Schnittstelle 108 des RFID-Tokens 106. Bei den Schnittstellen 104, 105 und 108 kann es sich um Schnittstellen für eine sogenannte Nahfeldkommunikation handeln. Die Schnittstelle 105 kann wiederum analog zu der Schnittstelle 104 als virtuelle RFID Schnittstelle ausgebildet sein und die Programminstruktionen 113 können das Treiberprogramm 180 beinhalten. In den Schnittstellen 104 und/oder 105 kann sich jeweils eine RFID-Karte 107 befinden.

Das Mobilfunkgerät 101 hat zumindest einen Prozessor 111 zur Ausführung von Programminstruktionen 113 sowie eine Mobilfunk-Schnittstelle 115 zur Kommunikation über das Netzwerk 116.

Bei einer Ausführungsform mit PIN gibt der Nutzer 102 seine PIN zu seiner Authentifizierung in den RFID-Token 106 ein, beispielsweise über das Mobilfunkgerät 101. Beispielsweise gibt der Nutzer 102 seine PIN über eine Tastatur des Mobilfunkgeräts 101 ein; die PIN wird dann von dem Mobilfunkgerät 101 über die Schnittstelle 105 zu dem RFID-Token 106 übertragen.

Durch Ausführung der Programminstruktionen 130 wird dann von dem RFID-Token 106 auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der RFID-Token 106 hierzu einen Fingerabdrucksensor oder ein Fingerabdrucksensor ist an das Mobilfunkgerät 101 angeschlossen oder darin integriert. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den RFID-Token 106 betreffenden Schritte eines kryptographischen Protokolls zur Authentifizierung eines ID-Provider-Computersystems 136 gegenüber dem RFID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem RFID-Token und weist dadurch seine Leseberechtigung zum Lesen der in dem geschützten Speicherbereich 124 gespeicherten Attribute nach. Die Authentifizierung kann auch gegenseitig sein, d.h. auch der RFID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem RFID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem RFID-Token 106 und dem ID-Provider-Computersystem 136 vereinbart wird.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert sind. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des RFID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem RFID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem RFID-Token 106 den Vertrauensanker für die Authentizität der aus dem RFID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen RFID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt. Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem RFID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird beispielsweise wie folgt vorgegangen:
1. Authentifizierung des Nutzers 102 gegenüber dem RFID-Token 106.
   Der Nutzer 102 authentifiziert sich gegenüber dem RFID-Token 106. Bei einer Implementierung mit PIN gibt der Nutzer 102 hierzu seine PIN beispielsweise über das Nutzer-Computersystem 100 oder das Mobilfunkgerät 101 in den RFID-Token 106 ein. Durch Ausführung der Programminstruktionen 130 prüft dann der RFID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem RFID-Token 106.
   Hierzu wird eine geschützte Verbindung 172 zwischen dem RFID-Token 106 und dem ID-Provider-Computersystem 136 über eine Netzwerkverbindung, insbesondere eine Mobilfunkverbindung, sowie über die Schnittstellen 105 und 108 hergestellt. Zum Aufbau der Mobilfunkverbindung zwischen dem Mobilfunkgerät 101 und dem ID-Provider-Computersystem 136 über das Netzwerk 116 kann zum Beispiel ein Mobile IP Protokoll verwendet werden, und zwar nach dem Standard der Internet Engineering Task Force (IETF). Insbesondere kann das Mobilfunkgerät 101 einen Webbrowser oder eine andere TCP/IP fähige Anwendung haben, die für den Aufbau der Mobilfunkverbindung verwendet wird. Die geschützte Verbindung 172 ist in der Fig. 1 als eine gestrichelte Linie gezeigt.
   Beispielsweise überträgt das ID-Provider-Computersystem 136 sein Zertifikat 144 über diese Verbindung 172 an den RFID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem RFID-Token 106 über die Verbindung 172 an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung 172 an den RFID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem RFID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem RFID-Token 106 authentifiziert hat, und nachdem sich das ID-Provider-Computersystem 136 erfolgreich gegenüber dem RFID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung 172 an den RFID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung 172 an das ID-Provider-Cömputersystem 136 übertragen und dort durch Ausführung der Programminstruktionen 148 entschlüsselt. Dadurch erhält das ID-Provider-Computersystem 136 Kenntnis der aus dem RFID-Token 106 ausgelesenen Attribute.
   Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem RFID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem RFID-Token 106 und der Authentifizierung des ID-Provider-Computersystems 136 gegenüber dem RFID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem RFID-Token 106 authentifizieren muss und nachfolgend das ID-Provider-Computersystem 136. Es ist aber grundsätzlich auch möglich, dass sich zunächst das ID-Provider-Computersystem 136 gegenüber dem RFID-Token 106 authentifizieren muss und erst nachfolgend der Nutzer 102.

In dem ersten Fall ist der RFID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem RFID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des RFID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem RFID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

Vorzugsweise ist das ID-Provider-Computersystem 136 zur Nutzung durch eine Vielzahl von Nutzern ausgebildet. In diesem Fall erfolgt eine Zuordnung des Nutzer-Computersystems 100 des Nutzers 102 zu dem Mobilfunkgerät 101 desselben Nutzers 102, damit das ID-Provider-Computersystem 136 die aus dem RFID-Token 106 des Nutzers 102 gelesenen Attribute an das Nutzer-Computersystem 100 dieses Nutzers 102 und nicht eines anderen Nutzers sendet.

Um eine solche Zuordnung herzustellen, wird beispielsweise wie folgt vorgegangen:
Zunächst wird von dem Nutzer-Computersystem 100 eine Dienst-Anforderung 164 über das Netzwerk 116 an das Dienst-Computersystem 150 gesendet. Das Dienst-Computersystem 150 antwortet auf die Dienst-Anforderung 164 mit der Anforderung zumindest eines Attributs des Nutzers 102 des Nutzer-Computersystems 100, beispielsweise also mit einer Attributspezifizierung 166. Diese Attributspezifizierung 166 sendet das Dienst-Computersystem 150 über das Netzwerk 116 an das Nutzer-Computersystem 100.

Zwischen dem Nutzer-Computersystem 100 und dem ID-Provider-Computersystem 136 wird über das Netzwerk 116 dann eine erste Verbindung aufgebaut, indem beispielsweise der Nutzer 102 in ein Browser-Programm des Nutzer-Computersystems 100 die URL des ID-Provider-Computersystems 136 eingibt. Über diese erste Verbindung wird dann die Attributspezifizierung 166 als Nachricht von dem Nutzer-Computersystem 100 an das ID-Provider-Computersystem 136 gesendet.

Das ID-Provider-Computersystem 136 generiert daraufhin eine Kennung, die dem Nutzer-Computersystem 100 zugeordnet ist. Bei der Kennung kann es sich um eine eindeutige Kennung, wie zum Beispiel eine GUID, einen Schlüssel, wie zum Beispiel einen symmetrischen oder asymmetrischen Schlüssel, handeln. Eine solche Kennung 174 sendet das ID-Provider-Computersystem 136 über die erste Verbindung an das Nutzer-Computersystem 100 zurück.

Die Kennung 174 wird dann von dem Nutzer-Computersystem 100 zu dem Mobilfunkgerät 101 übertragen. Beispielsweise sendet das Nutzer-Computersystem 100 hierzu die Kennung 174 von seiner Schnittstelle 104 an die entsprechende Schnittstelle 105 des Mobilfunkgeräts 101.

Von dem Mobilfunkgerät 101 wird dann eine Mobilfunkverbindung über das Netzwerk 116 mit dem ID-Provider-Computersystem 136 aufgebaut, beispielsweise indem der Nutzer 102 des Mobilfunkgeräts 101 die URL des ID-Provider-Computersystems 136 in ein Webbrowser-Programm des Mobilfunkgeräts 101, welches durch die Programminstruktionen 112 gebildet wird, eingibt. Durch die Mobilfunkverbindung wird also eine zweite Verbindung hergestellt.

Über die zweite Verbindung sendet das Mobilfunkgerät 101 die Kennung 174 an das ID-Provider-Computersystem 136. Da diese Kennung 174 identisch ist mit der dem Nutzer-Computersystem 100 zugeordneten Kennung 174, baut das ID-Provider-Computersystem 136 die geschützte Verbindung 172 mit Hilfe dieser zweiten Verbindung auf, um das oder die in der Attributspezifizierung 166 spezifizierten Attribute 176 aus dem RFID-Token 106 auszulesen.

Nachdem das ID-Provider-Computersystem 136 die Attribute 176 von dem RFID-Token 106 über die geschützte Verbindung 172 empfangen hat, so signiert es diese Attribute 176 mit Hilfe seines Zertifikats 144. Daraufhin sendet das ID-ProviderComputersystem 136 eine Antwort 170 über die erste Verbindung an das Nutzer-Computersystem 100, wobei die Antwort die Attribute 176 und deren Signatur beinhaltet. Die Antwort 170 kann auch eine Signatur der Kennung 174 und/oder die Kennung 174 selbst und/oder eine über eine Verkettung der Attribute 176 und der Kennung 174 gebildete Signatur aufweisen.

Von dem Nutzer-Computersystem 100 kann die Antwort 170 dann an das Dienst-Computersystem 150 weitergeleitet werden, welches somit in vertrauenswürdiger Art und Weise von dem in der Attributspezifizierung 166 genannten Attributen und ggf. der Kennung Kenntnis erhält und dann den in der Dienst-Anforderung 164 spezifizierten Dienst erbringen kann.

Alternativ kann die Antwort 170 auch unmittelbar von dem ID-Provider-Computersystem 136 an das Dienst-Computersystem 150 über das Netzwerk 116 übermittelt werden.

Nach einer Ausführungsform wird die Kennung 174 in einem nichtflüchtigen Speicher des Nutzer-Computersystems 100, wie zum Beispiel in einem Festplattenspeicher des Nutzer-Computersystems 100, gespeichert, wie zum Beispiel in Form eines sogenannten Cookies 178. Ferner wird die Antwort 170 in einem nichtflüchtigen Speicher des Dienst-Computersystems 150 gespeichert.

Wenn der Nutzer 102 mittels seines Nutzer-Computersystems 100 zu einem späteren Zeitpunkt erneut eine weitere Dienst-Anforderung 164 an das DienstComputersystem 150 richtet, so kann das Dienst-Computersystem 150 über das Netzwerk 116 auf den Cookie 178 zugreifen und so die Kennung 174 aus dem Nutzer-Computersystem 100 auslesen. Wenn diese Kennung ebenfalls Teil der Antwort 170 ist, welche in dem Dienst-Computersystem 150 gespeichert ist, so ist das Dienst-Computersystem 150 dann bereits in Besitz der für die Erbringung des gewünschten Dienstes für den Nutzer 102 erforderlichen Attribute, da es diese gespeicherte Antwort über die Kennung dem Nutzer 102 zuordnen kann.

Nach einer Ausführungsform der Erfindung hat die Kennung 174 eine z.B. hinsichtlich der Zeitdauer oder der Anzahl von Nutzungen der gespeicherten Antwort 170 begrenzte Gültigkeit. Die maximale Gültigkeit der Kennung 174 kann zum Beispiel in Form eines Verfallsdatums in der Antwort 170 angegeben sein. Wenn dieses Verfallsdatum erreicht oder überschritten ist, kann das Dienst-Computersystem 150 die in dem Dienst-Computersystem 150 gespeicherte Antwort nicht mehr verwenden, sondern muss aufgrund einer nachfolgenden weiteren Dienst-Anforderung 164 mit der Attributspezifizierung 166 antworten, sodass der oben beschriebene Ablauf zum Auslesen des oder der Attribute aus dem RFID-Token 106 erneut durchgeführt wird.

Anstelle des Nutzer-Computersystems 100 und des Mobilfunkgeräts 101 können die jeweiligen Funktionalitäten auch in einem einzigen elektronischen Gerät realisiert sein, wie z.B. in einem sog. Smartphone oder einem anderen netzwerkfähigen Gerät. Statt einer Mobilfunkverbindung kann dann auch eine andere Netzwerkverbindung zur Kommunikation dienen.

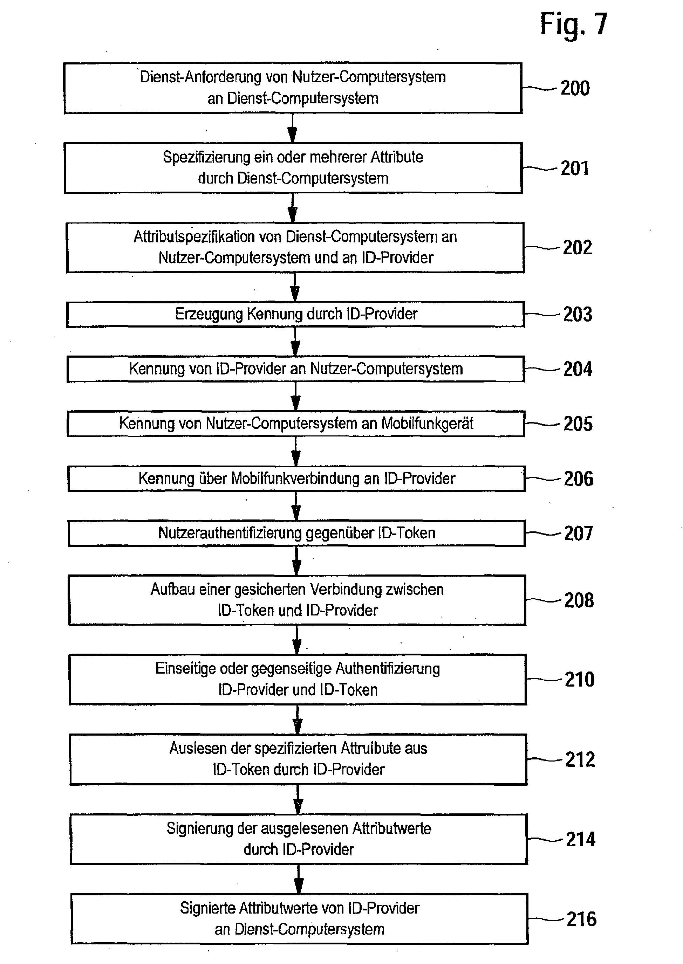

Die Figur 7 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 201 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 202 wird die Attributspezifikation, d.h. die in dem Schritt 201 erfolgte Spezifizierung der ein oder mehreren der Attribute, von dem Dienst-Computersystem an das ID-Provider-Computersystem übertragen, und zwar entweder direkt oder über das Nutzer-Computersystem.

Beispielsweise empfängt das Nutzer-Computersystem von dem Dienst-Computersystem die Attributspezifikation und baut daraufhin eine erste Verbindung über das Netzwerk zu dem ID-Provider-Computersystem auf. Das Nutzer-Computersystem sendet dann die Attributspezifikation über die erste Verbindung an das ID-Provider-Computersystem. In dem Schritt 203 erzeugt das ID-Provider-Computersystem daraufhin eine Kennung, die es dem Nutzer-Computersystem zuordnet, von dem es die Attributspezifikation erhalten hat. Diese Zuordnung wird durch das ID-Provider-Computersystem gespeichert. In dem Schritt 204 wird die Kennung von dem ID-Provider-Computersystem an das Nutzer-Computersystem gesendet, wie zum Beispiel über die erste Verbindung, die zum Beispiel als eine sogenannte Session ausgebildet sein kann.

In dem Schritt 205 wird die Kennung von dem Nutzer-Computersystem an das Mobilfunkgerät übertragen. Dies kann automatisch erfolgen, wie zum Beispiel über eine NFC-Kommunikation zwischen dem Nutzer-Computersystem und dem Mobilfunkgerät oder auf einem anderen Kommunikationskanal, wie zum Beispiel optisch. Beispielsweise wird die Kennung auf einem Monitor des Nutzer-Computersystems angezeigt und von einer Kamera des Mobilfunkgeräts optisch erfasst.

In dem Schritt 206 wird zwischen dem Mobilfunkgerät und dem ID-Provider-Computersystem eine Mobilfunkverbindung aufgebaut und die Kennung über die Mobilfunkverbindung von dem Mobilfunkgerät an das ID-Provider-Computersystem übertragen. Da die Kennung, die das ID-Provider-Computersystem in dem Schritt 206 über die Mobilfunkverbindung empfängt, identisch ist mit der in dem Schritt 203 erzeugten und dem Nutzer-Computersystem zugeordneten Kennung, ist damit die Mobilfunkverbindung und der über die Mobilfunkverbindung von dem ID-Provider-Computersystem auslesbare RFID-Token ebenfalls dem Nutzer-Computersystem bzw. dessen Nutzer zugeordnet.

Um dem ID-Provider-Computersystem die Möglichkeit zu geben, Attribute aus seinem RFID-Token auszulesen, authentifiziert sich der Nutzer in dem Schritt 207 gegenüber dem RFID-Token.

In dem Schritt 208 wird eine geschützte Verbindung zwischen dem RFID-Token und dem ID-Provider-Computersystem aufgebaut (vgl. Verbindung 172 in Fig. 1). Hierbei handelt es sich vorzugsweise um eine Verbindung mit Ende-zu-Ende-Verschlüsselung, beispielsweise nach einem so genannten Secure Messaging-Verfahren.

In dem Schritt 210 erfolgt zumindest eine Authentifizierung des ID-Provider-Computersystems gegenüber dem RFID-Token über die in dem Schritt 208 aufgebaute geschützte Verbindung. Zusätzlich kann eine Authentifizierung auch des RFID-Tokens gegenüber dem ID-Provider-Computersystem vorgesehen sein.

Nachdem sowohl der Nutzer als auch das ID-Provider-Computersystem erfolgreich gegenüber dem RFID-Token authentifiziert worden sind, erhält das ID-Provider-Computersystem von dem RFID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem RFID-Token. Die Attribute werden dann beispielsweise mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

Zusätzlich kann auch die Kennung in dem Schritt 214 von dem ID-Provider-Computersystem signiert und in dem Schritt 216 über das Netzwerk an das Dienst-Computersystem oder das Nutzer-Computersystem gesendet werden.

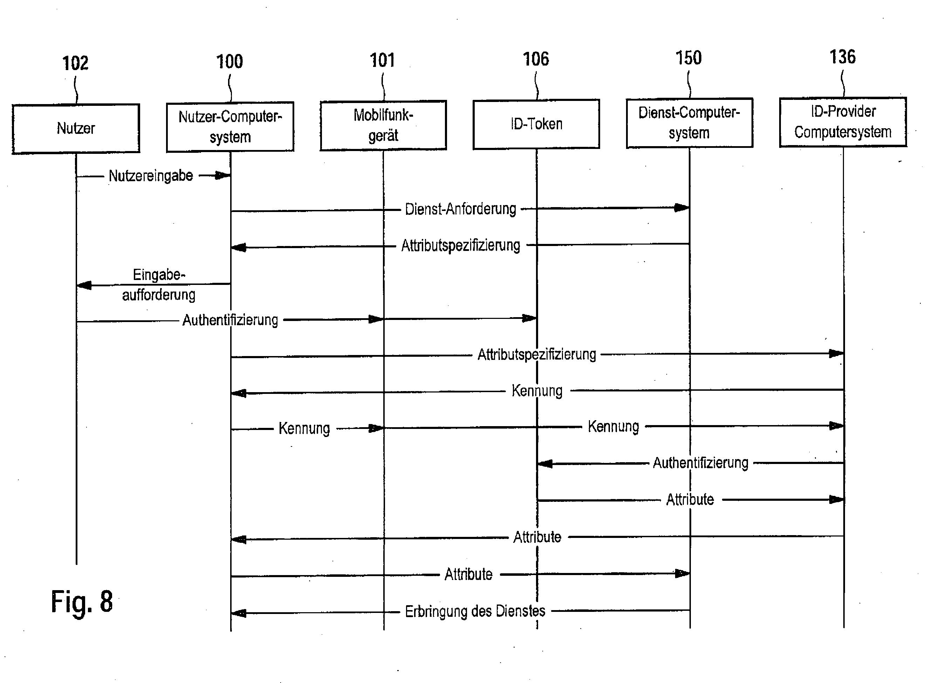

Die Figur 8 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem RFID-Token 106 auf.

Der Nutzer schaltet daraufhin sein Mobilfunkgerät 101 ein und authentifiziert sich zunächst gegenüber seinem Mobilfunkgerät 101. Danach authentifiziert sich der Nutzer 102 gegenüber dem RFID-Token 106, beispielsweise durch Eingabe seiner PIN in eine Tastatur des Mobilfunkgeräts 101. Das Mobilfunkgerät 101 überträgt die von dem Nutzer 102 eingegebene PIN von seiner Schnittstelle 105 (vgl. Figur 6) an den RFID-Token 106.

Die Attributspezifizierung wird von dem Nutzer-Computersystem 100 an ein ID-Provider-Computersystem 136 weitergeleitet. Das ID-Provider-Computersystem 136 generiert daraufhin eine Kennung, die das ID-Provider-Computersystem dem Nutzer-Computersystem 100 zuordnet und an das Nutzer-Computersystem 100 sendet. Die Zuordnung der Kennung zu dem Nutzer-Computersystem 100 wird von dem ID-Provider-Computersystem 136 gespeichert.

Die Kennung wird dann von dem Nutzer-Computersystem 100 zu dem Mobilfunkgerät 101 übertragen. Dies kann manuell erfolgen, indem der Nutzer 102 die auf einer Anzeige des Nutzer-Computersystems 100 angezeigte Kennung abliest und über eine Tastatur des Mobilfunkgeräts 101 in das Mobilfunkgerät 101 eingibt. Die Übertragung kann auch vollautomatisch ohne Involvierung des Nutzers 102 oder teilautomatisch erfolgen, und zwar beispielsweise durch eine Funkübertragung der Kennung von dem Nutzer-Computersystem 100 zu dem Mobilfunkgerät 101 über das Netzwerk 116 (vgl. Figur 6) oder über eine NFC-Kommunikationsverbindung, die zwischen dem Nutzer-Computersystem 100 und dem Mobilfunkgerät 101 aufgebaut wird.

Ferner kann die Übertragung der Kennung zwischen dem Nutzer-Computersystem und dem Mobilfunkgerät 101 auch auf optischem Wege erfolgen, beispielsweise indem die im Klartext auf der Anzeige des Nutzer-Computersystems 100 angezeigte Kennung oder die als 2D-Barcode angezeigte Kennung mit Hilfe einer Kamera des Mobilfunkgeräts 101 optisch erfasst wird.

Zwischen dem Mobilfunkgerät 101 und dem ID-Provider-Computersystem 136 wird eine Mobilfunkverbindung aufgebaut, über die die Kennung von dem Mobilfunkgerät 101 zu dem ID-Provider-Computersystem 136 übertragen wird. Aufgrund der in dem ID-Provider-Computersystem 136 gespeicherten Zuordnung der Kennung zu dem Nutzer-Computersystem 100 ist damit auch diese Mobilfunkverbindung dem Nutzer-Computersystem 100 zugeordnet.

Das ID-Provider-Computersystem 136 kommuniziert dann über die Mobilfunkverbindung und das Mobilfunkgerät 101 mit dem RFID-Token 106, um sich gegenüber dem RFID-Token 106 zu authentifizieren und um eine Leseanforderung zum Lesen der Attribute gemäß der Attributspezifizierung an den RFID-Token 106 zu richten.

Unter der Voraussetzung der vorherigen erfolgreichen Authentifizierung des Nutzers 102 und des ID-Provider-Computersystems 136 antwortet der RFID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

Neben den Attributen kann das ID-Provider-Computersystem 136 auch die Kennung signieren und zusammen mit den signierten Attributen an das Nutzer-Computersystem 100 senden.

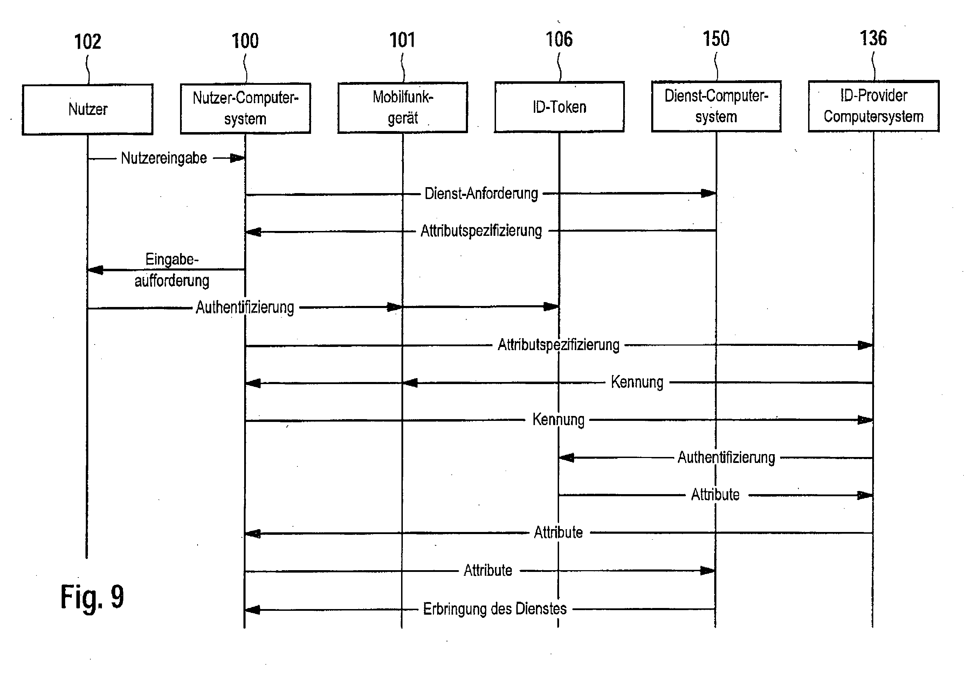

Die Figur 9 zeigt eine weitere Ausführungsform eines erfindungsgemäßen Verfahrens. Von der Ausführungsform gemäß Figur 8 unterscheidet sich die Ausführungsform der Figur 9 insbesondere dadurch, dass das ID-Provider-Computersystem 136 die Kennung, welche es nach Empfang der Attributspezifikation von dem Nutzer-Computersystem 100 generiert, nicht an das Nutzer-Computersystem 100 sendet, sondern an das Mobilfunkgerät 101. Die Kennung wird dann von dem Mobilfunkgerät 101 an das Nutzer-Computersystem 100 übertragen, und zwar wiederum entweder manuell durch den Nutzer 102 oder automatisch oder teilautomatisch, z.B. über einen Funkkanal oder einen optischen Kanal.

Das Nutzer-Computersystem 100 sendet die Kennung dann an das ID-Provider-Computersystem 136, sodass die der Kennung zugeordnete Mobilfunkverbindung zwischen dem Mobilfunkgerät 101 und dem ID-Provider-Computersystem 136 auch dem Nutzer-Computersystem 100 zugeordnet ist.

In einem weiteren Ausführungsvariante ist es möglich, dass die Attributspezifizierung von dem Nutzer-Computersystem 100 an das Mobilfunkgerät 101 übertragen wird, und zwar manuell oder automatisch, und dass die Attributspezifizierung statt von dem Nutzer-Computersystem 100 von dem Mobilfunkgerät 101 an das ID-Provider-Computersystem 136 gesendet wird.

Ferner ist es auch möglich, dass das ID-Provider-Computersystem die Kennung sowohl an das Mobilfunkgerät 101 als auch an das Nutzer-Computersystem 100 überträgt. Die Übertragung der Kennung kann dann wahlweise von dem Mobilfunkgerät 101 an das Nutzer-Computersystem 100 oder in der anderen Richtung erfolgen.

### Bezugszeichenliste

- 100: Nutzer-Computersystem
- 101: Mobilfunkgerät
- 102: Nutzer
- 104: Schnittstelle
- 105: Schnittstelle
- 106: RFID-Token
- 107: RFID-Karte
- 108: Schnittstelle
- 110: Prozessor
- 111: Prozessor
- 112: Programminstruktionen
- 113: Programminstruktionen
- 114: Netzwerk-Schnittstelle
- 115: Mobilfunk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Verbindung
- 174: Kennung
- 176: Attribut
- 178: Cookie
- 179: Antennenkeule
- 180: Treiberprogramm
- 182: Speicherkarten-Lesegerät
- 183: Speicherkarten-Schnittstelle
- 184: RFID-Lesekommando
- 185: RFID-Programmschnittstelle
- 186: Speicherkartengehäuse
- 187: Speicherkarten-Schnittstelle
- 188: RFID-Schnittstelle
- 189: Prozessor
- 190: Programm
- 191: Spannungsversorgungsschaltung
- 192: Speicherkommando
- 193: RFID-Antwort
- 194: Speicher
- 195: Speicherkommando
- 196: Lesekommando
- 197: Programminstruktionen
- 198: Platine
- 199: Pfeilrichtung

## Patentansprüche

1. Verfahren zum Lesen eines RF1D-Tokens (106) mit folgenden Schritten:
- Umwandlung eines RFID-Lesekommandos (184) in ein Speicherkartenkommando (192) durch ein elektronisches Gerät (100, 101) mittels eines Treiberprogramms (180), das eine Umsetzungsroutine zur Umsetzung eines RFID-Protokolls in ein Speicherkartenprotokoll und umgekehrt aufweist, wobei das elektronische Gerät (100, 101) einen integrierten Speicherkartenleser (182) mit einer Speicherkartenschnittstelle (183) aufweist,
- Übertragung des Speicherkartenkommandos an eine RFID-Karte (107) durch den Speicherkartenleser, wobei die RFID-Karte eine Speicherkarten-Schnittstelle (187) für den Speicherkartenleser, einen Prozessor (189) zur Ausführung eines Programms (190) zur Umsetzung des Speicherkartenprotokolls in das RFID-Protokoll und umgekehrt und ein über die Speicherkarten-Schnittstelle ansprechbares RFID-Lesegerät (188, 189, 190) beinhaltet,
- Sendung des in dem Speicherkartenkommando (192) beinhalteten RFID-Lesekommandos (184) von dem RFID-Lesegerät an den RFID-Token durch ein RFID Lesesignal,
- Empfang einer RFID-Antwort (193) von dem RFID-Token durch das RFID-Lesegerät,
- Übertragung der RFID-Antwort (193) über die Speicherkarten-Schnittstelle an den Speicherkartenleser des elektronischen Geräts.

2. Verfahren nach Anspruch 1, wobei das RFID-Lesekommando durch ein Anwendungsprogramm (112) des elektronischen Geräts erzeugt wird und die RFID-Antwort von dem Anwendungsprogramm verarbeitet wird.

3. Verfahren nach Anspruch 1 oder 2, wobei das RFID-Lesekommando in ein Schreibkommando (192) der Speicherkarten-Schnittstelle umgewandelt wird.

4. Verfahren nach Anspruch 1, 2 oder 3, wobei es sich bei der Speicherkarten-Schnittstelle um eine SD-Speicherkarten-Schnittstelle handelt.

5. Verfahren nach einem der vorhergehenden Ansprüche, wobei das elektronische Gerät zumindest eine gedruckte Schaltung aufweist und der Speicherkartenleser in ein Gehäuse des elektronischen Geräts integriert ist, sodass die gedruckte Schaltung den Speicherkartenleser zumindest teilweise überdeckt, und wobei die RFID-Karte eine Antenne aufweist, deren Antennenkeule (179) in eine Einführrichtung (199) der Speicherkarte in den Speicherkartenleser ausgerichtet ist.

6. Verfahren nach einem der vorhergehenden Ansprüche, wobei die RFID-Antwort (193) in einem Speicher (195) der RFID-Karte zwischengespeichert wird und durch ein Lesekommando (196) des elektronischen Geräts ausgelesen wird, um die RFID-Antwort in das Anwendungsprogramm einzugeben.

7. Verfahren nach Anspruch 6, wobei der Empfang der RFID-Antwort von der RFID-Karte an das elektronische Gerät signalisiert wird, um dadurch das Lesekommando des elektronischen Geräts auszulösen.

8. Verfahren nach Anspruch 6, wobei das Lesekommando nach Ablauf eines vordefinierten Zeitraums nach der Übertragung des Speicherkartenkommandos von dem elektronischen Gerät über die Speicherkarten-Schnittstelle an die RFID-Karte gerichtet wird.

9. Verfahren nach Anspruch 6, 7 oder 8, wobei das Lesekommando vor einem nachfolgenden Speicherkartenkommando von dem elektronischen Gerät über die Speicherkarten-Schnittstelle an die RFID-Karte gerichtet wird.

10. Verfahren nach einem der vorhergehenden Ansprüche, wobei durch das Anwendungsprogramm die das elektronische Gerät betreffenden Schritte eines kryptografischen Protokolls durchgeführt werden, um zumindest ein in den RFID-Token gespeichertes Attribut auszulesen, wobei zur Durchführung des kryptografischen Protokolls mehrere RFID-Lesekommandos von dem Anwendungsprogramm erzeugt werden, die jeweils in Speicherkartenkommandos durch ein Treiberprogramm (180) für die RFID-Karte (107) des elektronischen Geräts umgewandelt werden.

11. Verfahren nach einem der vorhergehenden Ansprüche zum Lesen zumindest eines in dem RFID-Token gespeicherten Attributs, wobei der RFID-Token einem Nutzer (102) zugeordnet ist, und wobei der RFID-Token eine RFID-Schnittstelle (108) aufweist, mit folgenden weiteren Schritten:
- Authentifizierung des Nutzers gegenüber dem RFID-Token,
- Aufbau einer Kommunikationsverbindung, insbesondere einer Mobilfunkverbindung (172), zwischen dem elektronischen Gerät (100, 101), welches insbesondere als Mobilfunkgerät (101) ausgestaltet sein kann, und einem ersten Computersystem (136), wobei das elektronische Gerät eine zweite Schnittstelle (104, 105) aufweist, die die Speicherkarten-Schnittstelle beinhaltet,
- Aufbau einer geschützten Verbindung (172) über die Kommunikationsverbindung und über die ersten und zweiten Schnittstellen zwischen dem ersten Computersystem und dem RFID-Token,
- Authentifizierung des ersten Computersystems (136) gegenüber dem RFID-Token über die geschützte Verbindung,
- nach erfolgreicher Authentifizierung des Nutzers und des ersten Computersystems gegenüber dem RFID-Token, Lesezugriff des ersten Computersystems auf das zumindest eine in dem RFID-Token gespeicherte Attribut zur Übertragung des zumindest einen Attributs nach dessen Signierung über ein Netzwerk (116), wobei zur Durchführung des Lesezugriffs ein oder mehrere RFID-Lesekommandos durch das erste Computersystem und/oder das elektronische Gerät erzeugt werden.

12. RFID-Karte mit einer Speicherkarten-Schnittstelle (187) für ein Speicherkarten-Lesegerät (182) eines elektronischen Geräts (100, 101) und mit einem Speicherkarten-Gehäuse, in welchem die Speicherkarten- Schnittstelle und ein über die Speicherkarten-Schnittstelle ansprechbares RFID-Lesegerät (188, 189, 190) integriert sind, und mit einem Prozessor (189) zur Ausführung eines Programms (190) zur Umsetzung eines Speicherkartenprotokolls in ein RFID-Protokoll und umgekehrt, wobei der Prozessor (189) zur Ansteuerung einer RFID-Schnittstelle (188) der RFID-Karte zum Senden eines RFID-Lesekommandos (184) aufgrund des Empfang eines Speicherkartenkommandos (192) ausgebildet ist und wobei es sich bei dem Speicherkartenkommando vorzugsweise um ein Kommando zum Speichern des RFID-Lesekommandos (184) handelt.

13. RFID-Karte mit einem Speicher (195) zur Speicherung einer aufgrund des RFID-Lesekommandos empfangenen RFID-Antwort (193), wobei auf den Speicher über die Speicherkarten-Schnittstelle durch ein Lesekommando (196) zugegriffen werden kann.

14. RFID-Karte nach Anspruch 12 oder 13, mit Mitteln (189) zur Signalisierung des Empfangs der RFID-Antwort über die Speicherkarten-Schnittstelle.

15. Elektronisches Gerät mit einem Speicherkartenleser (182) wahlweise für eine Speicherkarte oder eine RFID-Karte nach Anspruch 12, 13 oder 14 und einem Treiberprogramm (180), das eine Umsetzungsroutine zur Umsetzung eines RFID-Protokolls in ein Speicherkartenprotokoll und umgekehrt und damit zur Umwandlung eines RFID-Lesekommandos in ein Speicherkommando aufweist.

## Claims

1. A method for reading an RFID token (106), having the following steps:
- converting an RFID read command (184) into a memory card command (192) by an electronic device (100, 101) by means of a driver program (180), which has a conversion routine for converting an RFID protocol into a memory card protocol and vice versa, wherein the electronic device (100, 101) has an integrated memory card reader (182) having a memory card interface (183),
- transmitting the memory card command to an RFID card (107) by means of the memory card reader, wherein the RFID card contains a memory card interface (187) for the memory card reader, a processor (189) for executing a program (190) for converting the memory card protocol into the RFID protocol and vice versa, and an RFID reader (188, 189, 190), which can be addressed via the memory card interface,
- transmitting the RFID read command (184) contained in the memory card program from the RFID reader to the RFID token by means of an RFID read signal,
- receiving an RFID response (193) from the RFID token by means of the RFID reader,
- transmitting the RFID response (193) to the memory card reader of the electronic device via the memory card interface.

2. The method according to claim 1, wherein the RFID read command is generated by an application program (112) of the electronic device and the RFID response is processed by the application program.

3. The method according to claim 1 or 2, wherein the RFID read command is converted into a write command (192) of the memory card interface.

4. The method according to claim 1, 2 or 3, wherein the memory card interface is an SD memory card interface.

5. The method according to any one of the preceding claims, wherein the electronic device comprises at least one printed circuit, and the memory card reader is integrated into a housing of the electronic device such that the printed circuit at least partially overlaps the memory card reader, and wherein the RFID card has an antenna, the antenna lobe (179) of which is oriented in an insertion direction (199) of the memory card into the memory card reader.

6. The method according to any one of the preceding claims, wherein the RFID response (193) is stored for the interim in a memory (195) of the RFID card and is read out by a read command (196) of the electronic device in order to enter the RFID response into the application program.

7. The method according to claim 6, wherein the receipt of the RFID response by the RFID card is signaled to the electronic device in order to trigger the read command of the electronic device.

8. The method according to claim 6, wherein the read command is directed to the RFID card after expiration of a predefined time period after the transmission of the memory card command from the electronic device via the memory card interface to the RFID card.

9. The method according to claim 6, 7 or 8, wherein the read command is directed to the RFID card by the electronic device via the memory card interface before a subsequent memory card command.

10. The method according to any one of the preceding claims, wherein the steps of a cryptographic protocol related to the electronic device are carried out by the application program in order to read out at least one attribute stored in the RFID token, wherein, in order to carry out the crytographic protocol, a plurality of RFID read commands are generated by the application program, each of which RFID read commands is converted into memory card commands by a driver program (180) for the RFID card (107) of the electronic device.

11. The method according to any one of the preceding claims for reading at least one attribute stored in the RFID token, wherein the RFID token is assigned to a user (102), and wherein the RFID token has an RFID interface (108), having the following further steps:
- authenticating the user with respect to the RFID token,
- establishing a communication connection, in particular a mobile wireless connection (172), between the electronic device (100, 101), which can be designed, in particular, as a mobile radio device (101), and a first computer system (136), wherein the electronic device has a second interface (104, 105), which contains the memory card interface,
- establishing a secure connection (172) over the communication connection and over the first and second interfaces between the first computer system and the RFID token.
- authenticating the first computer system (136) with respect to the RFID token over the secure connection,
- after successfully authenticating the user and the first computer system with respect to the RFID token, read access of the first computer system to the at least one attribute stored in the RFID token to transmit the at least one attribute, after it has been signed, via a network (116), wherein, in order to carry out the read access, one or more RFID read commands are generated by the first computer system and/or the electronic device.

12. An RFID card having a memory card interface (187) for a memory card reader (182), an electronic device (100, 101), and a memory card housing, in which the memory card interface and an RFID reader (188, 189, 190), which can be addressed via the memory card interface, are integrated, and having a processor (189) for executing a program (190) to convert a memory card protocol into an RFID protocol and vice versa, wherein the processor (189) is designed to control an RFID interface (188) of the RFID card to send an RFID read command (184) upon receipt of a memory card command (192) and wherein the memory card command is preferably a command to store the RFID read command (184).

13. An RFID card having a memory (195) for storing an RFID response (193) received due to the RFID read command, wherein the memory can be accessed via the memory card interface via a read command (196).

14. The RFID card according to claim 12 or 13, comprising means (189) for signaling the receipt of the RFID response via the memory card interface.

15. An electronic device comprising a memory card reader (182) either for a memory card or an RFID card according to claim 12, 13 or 14 and a driver program (180), which has a conversion routine for converting an RFID protocol into a memory card protocol and vice versa and, therefore, for converting an RFID read command into a memory command.

## Revendications

1. Procédé de lecture d'un jeton RFID (106) avec les étapes suivantes :
- conversion d'une commande de lecture RFID (184) en une commande de carte mémoire (192) par un appareil électronique (100, 101 au moyen d'un programme de pilote (180), qui présente une routine de conversion pour la conversion d'un protocole RFID en un protocole de carte mémoire et inversement, où l'appareil électronique (100, 101) présente un lecteur de carte mémoire (182) intégré avec une interface de carte mémoire (183),
- transmission de la commande de carte mémoire à une carte RFID (107) par le lecteur de carte mémoire, où la carte RFID contient une interface de carte mémoire (187) pour le lecteur de carte mémoire, un processeur (189) pour l'exécution d'un programme (190) destiné à la conversion du protocole de carte mémoire en protocole RFID et inversement, et un appareil de lecture RFID (188, 189, 190) abordable par l'intermédiaire de l'interface de carte mémoire,
- envoi de la commande de lecture RFID (184) contenue dans la commande de carte mémoire (192) à partir de l'appareil de lecture RFID vers le jeton RFID par un signal de lecture RFID,
- réception d'une réponse RFID (193) à partir du jeton RFID par l'appareil de lecture RFID,
- transmission de la réponse RFID (193) vers le lecteur de carte mémoire de l'appareil électronique par l'intermédiaire de l'interface de carte mémoire.

2. Procédé selon la revendication 1, dans lequel la commande de lecture RFID est générée par un programme d'application (112) de l'appareil électronique et la réponse RFID est exploitée par le programme d'application.

3. Procédé selon les revendications 1 ou 2, dans lequel la commande de lecture RFID est convertie en une commande d'écriture (192) de l'interface de carte mémoire.

4. Procédé selon les revendications 1, 2 ou 3, dans lequel il s'agit d'une interface de carte mémoire SD dans le cas de l'interface de carte mémoire.

5. Procédé selon l'une des revendications précédentes, dans lequel l'appareil électronique présente au moins un circuit imprimé et le lecteur de carte mémoire est intégré dans un boîtier de l'appareil électronique, de sorte que le circuit imprimé recouvre au moins partiellement le lecteur de carte mémoire, et dans lequel la carte RFID présente une antenne, dont le faisceau d'antenne (179) est orienté dans une direction d'alimentation (199) de la carte mémoire dans le lecteur de carte mémoire.

6. Procédé selon l'une des revendications précédentes, dans lequel la réponse RFID (193) est stockée de façon intermédiaire dans une mémoire (195) de la carte RFID et est lue par une commande de lecture (196) de l'appareil électronique afin d'entrer la réponse RFID dans le programme d'application.

7. Procédé selon la revendication 6, dans lequel la réception de la réponse RFID est signalée à l'appareil électronique par la carte RFID afin de libérer par ce moyen la commande de lecture de l'appareil électronique.

8. Procédé selon la revendication 6, dans lequel la commande de lecture est dirigée de l'appareil électronique vers la carte RFID après l'écoulement d'un temps prédéfini après la transmission de la commande de carte mémoire par l'intermédiaire de l'interface de carte mémoire.

9. Procédé selon les revendications 6, 7 ou 8, dans lequel la commande de lecture est dirigée à partir de l'appareil électronique vers la carte RFID avant une commande de carte mémoire suivante par l'intermédiaire de l'interface de carte mémoire.

10. Procédé selon l'une des revendications précédentes, dans lequel les étapes d'un protocole cryptographique concernant l'appareil électronique sont exécutées par le programme d'application, afin de lire au moins un attribut stocké dans le jeton RFID, dans lequel, pour l'exécution du protocole cryptographique, plusieurs commandes de lecture RFID sont générées par le programme d'application, qui sont chaque fois converties en commandes de carte mémoire par un programme de pilote (180) pour la carte RFID (107) de l'appareil électronique.

11. Procédé selon l'une des revendications précédentes, pour la lecture d'au moins un des attributs stockés dans le jeton RFID, dans lequel le jeton RFID est associé à un utilisateur (102), dans lequel le jeton RFID présente une interface RFID (108), avec les autres étapes suivantes :
- authentification de l'utilisateur par rapport au jeton RFID,
- élaboration d'une liaison de communication, notamment d'une liaison radio mobile (172) entre l'appareil électronique (100, 101), qui peut être, en particulier, conçu sous la forme d'un appareil radio mobile (101), et un premier système informatique (136), où l'appareil électronique présente une deuxième interface (104, 105) qui contient l'interface de carte mémoire,
- élaboration d'une liaison sécurisée (172) entre le premier système informatique et le jeton RFID par l'intermédiaire de la liaison de communication et par l'intermédiaire des première et deuxième interfaces,
- authentification du premier système informatique (136) par rapport au jeton RFID par l'intermédiaire d'une liaison sécurisée,
- après une authentification réussie de l'utilisateur et du premier système informatique par rapport au jeton RFID, accès en lecture du premier système informatique sur au moins un attribut stocké dans le jeton RFID pour la transmission de l'au moins un attribut après sa signature sur un réseau (116), où, pour la réalisation de l'accès en lecture, une ou plusieurs commandes de lecture RFID sont générées par le premier système informatique et/ou l'appareil électronique.

12. Carte RFID avec une interface de carte mémoire (187) pour un appareil de lecture de cartes mémoire (182) d'un appareil électronique (100, 101) et avec un boîtier de cartes mémoire, dans lequel l'interface de carte mémoire et un appareil de lecture RFID (188, 189, 190) abordable par l'intermédiaire d'une interface de carte mémoire sont intégrés, et avec un processeur (189) pour l'exécution d'un programme (190) destiné à la conversion d'un protocole de carte mémoire en un protocole RFID et inversement, où le processeur (189) pour le démarrage d'une interface RFID (188) de la carte RFID est conçu pour l'émission d'une commande de lecture RFID (184) en raison de la réception d'une commande de carte mémoire (192) et où il s'agit de préférence d'une commande pour le stockage de la commande de lecture RFID (184) dans le cas de la commande de carte mémoire.

13. Carte RFID avec une mémoire (195) pour le stockage d'une réponse RFID (193) reçue en raison de la commande de lecture RFID, où on peut accéder à la mémoire par l'intermédiaire de l'interface de carte mémoire par une commande de lecture (196).

14. Carte RFID selon les revendications 12 ou 13, avec des moyens (189) pour la signalisation de la réception de la réponse RFID par l'intermédiaire de l'interface de carte mémoire.

15. Appareil électronique avec un lecteur de carte mémoire (182), au choix pour une carte mémoire ou une carte RFID selon les revendications 12, 13 ou 14, et un programme de pilote (180) qui présente une routine de conversion pour la conversion d'un protocole RFID en un protocole de carte mémoire, et inversement, et de ce fait pour la transformation d'une commande de lecture RFID en une commande de mémoire.
